**Europäisches Patentamt**

**European Patent Office**

**Office européen des brevets**

(19)

(11) Numéro de publication : **0 389 327 B1**

(12)

# FASCICULE DE BREVET EUROPEEN

(45) Date de publication du fascicule du brevet :
**04.08.93 Bulletin 93/31**

(51) Int. Cl.⁵ : **G01D 1/06,** G01B 7/00,
G01C 21/16, G05B 19/42,
B25J 13/08

(21) Numéro de dépôt : **90400627.7**

(22) Date de dépôt : **08.03.90**

(54) **Système pour la mesure de la position d'un mobile le long d'un axe rectiligne et son application aux robots.**

(30) Priorité : **10.03.89 FR 8903173**

(43) Date de publication de la demande :
**26.09.90 Bulletin 90/39**

(45) Mention de la délivrance du brevet :
**04.08.93 Bulletin 93/31**

(84) Etats contractants désignés :
**DE GB IT**

(56) Documents cités :
**FR-A- 2 357 942**
**GB-A- 2 045 938**
**US-A- 4 752 053**
**PATENT ABSTRACTS OF JAPAN, vol. 11, no.
311 (P-625)[2758], 12th October 1987; &
JP-A-62 102 304 (SHINKO ELECTRIC CO., LTD)
12-05-1987**

(56) Documents cités :
**ROBOTERSYSTEME, vol. 4, no. 4, novembre
1988, pages 245-250; M. WECK et al.:
"Prozessnahe Roboterprogrammierung unter
Einsatz eines inertialen Messsystems"**

(73) Titulaire : **AEROSPATIALE SOCIETE
NATIONALE INDUSTRIELLE**
**37, Boulevard de Montmorency**
**F-75016 Paris (FR)**

(72) Inventeur : **Sarramea, Claude**
**1, Impasse Beaujolais**
**F-31300 Toulouse (FR)**
Inventeur : **Jonca, Henri**
**30 bld Jean Brunhes**
**F-31300 Toulouse (FR)**

(74) Mandataire : **Bonnetat, Christian**
**CABINET BONNETAT 23, Rue de
St.Pétersbourg**
**F-75008 Paris (FR)**

## Description

La présente invention concerne un système pour la mesure de la position d'un mobile le long d'un axe rectiligne.

On sait que, par exemple en ce qui concerne les robots, il est particulièrement important de connaître, à chaque instant, la position des bras et des outils de ces robots. Les systèmes les plus précis pour déterminer la position d'un organe mobile de robot sont certainement les télémètres laser. Toutefois, de tels télémètres sont inutilisables lorsque le robot travaille dans une atmosphère fortement polluée, comme c'est le cas par exemple pour les salles de peinture industrielles automatisées. En effet, dans ce cas, les poussières de ponçage et les particules de peinture, d'une part, diffractent le faisceau laser provoquant de nombreuses erreurs de mesure incontrôlables, d'autre part, finissent par recouvrir les surfaces optiques des télémètres.

Par ailleurs, par les documents FR-A-2 357 942, GB-A-2 045 938 et ROBOTERSYSTEME, vol.4, n°4, novembre 1988, pages 245-250 sont décrits des systèmes pour la mesure de la position d'un mobile, comprenant des moyens pour délivrer en continu un signal représentatif de l'accélération instantanée dudit mobile et des moyens de calcul pour intégrer deux fois ce signal d'accélération, afin de déterminer la position du mobile.

Cependant, ces documents n'envisagent qu'en dynamique (c'est-à-dire sans arrêt), la mesure de la position du mobile. A aucun moment, les documents n'indiquent que le mobile doit s'arrêter à une position déterminée devant être mesurée avec précision.

On remarquera de plus que le document US-A-4 752 053 concerne un système destiné à déterminer la "condition de mouvement" d'un véhicule, de sorte qu'il n'intègre qu'une seule fois le signal d'accélération.

La présente invention a pour objet de remédier aux inconvénients mentionnés ci-dessus pour les télémètres laser et elle concerne un système pour la mesure précise de la position d'un mobile le long d'un axe rectiligne, susceptible de fonctionner sans inconvénient dans une atmosphère polluée. Elle est donc tout particulièrement, quoique non exclusivement, appropriée à être mise en oeuvre pour la détermination de la position des organes mobiles de robots de peinture, par exemple ceux destinés à peindre les avions.

Pour ce faire l'objet de la présente invention est de réaliser un système du type de celui des trois premiers documents cités, suffisamment rustique pour pouvoir travailler dans des ambiances polluées et en permettant d'indiquer de façon précise les positions d'arrêt du mobile.

A cette fin, selon l'invention, le système pour la mesure de la position d'un mobile se déplaçant le long d'un axe rectiligne, comportant :

- des moyens pour délivrer en continu un signal analogique représentatif de l'accélération instantanée dudit mobile ;
- des moyens pour échantillonner, à une période d'échantillonnage T, ledit signal analogique de façon à obtenir une suite de valeurs numériques $a_i$ (avec i = 0,1,2,3,...) correspondant à la valeur de l'accélération dudit mobile à des instants successifs $t_i$, deux à deux distants de la période d'échantillonnage T ;
- des moyens de calcul numériques pour calculer, à chacun desdits instants, les deux expressions :

(1) $\quad x_i = 1/2.a_i.t^2 + v_i - 1.t + x_i - 1$

(2) $\quad v_i = a_i.t + v_i - 1$

dans lesquelles :

. t représente le temps

. $x_i$ et $x_i-1$ sont les abscisses respectives dudit mobile aux instants $t_i$ et $t_i-1$ ; et

. $v_i$ et $v_i-1$ sont les vitesses respectives dudit mobile aux instants $t_i$ et $t_i-1$,

est caractérisé en ce qu'il comporte des moyens pour, d'une part, arrêter le fonctionnement desdits moyens de calcul lorsqu'un nombre n prédéterminé de valeurs $a_i$ consécutives délivrées par lesdits moyens d'échantillonnage sont nulles et que la vitesse $v_i$ est voisine de zéro, et, d'autre part, forcer à zéro la valeur de ladite vitesse et en ce que lesdits moyens de calcul numériques délivrent alors à leur sortie la position à laquelle s'est arrêté ledit mobile.

Ainsi, grâce à l'invention, on voit que l'on détermine la position x(t) dudit mobile à l'instant t grâce à la relation fondamentale de la dynamique :

$$x(t) = 1/2.a.t^2 + v_o.t + x_o$$

faisant intervenir l'accélération a, ainsi que la vitesse initiale $v_o$ et la position initiale $x_o$.

On voit de plus que la double intégration permettant d'obtenir la position x(t) à partir de l'accélération a est effectuée par voie numérique. Le calcul est donc fiable et le système peut être simple. Une intégration analogique, au contraire, entraînerait la réalisation d'un appareil complexe et coûteux.

On remarquera par ailleurs qu'il serait pratiquement impossible de réaliser un système de mesure de position avec intégration analogique, car il serait très difficile de déterminer l'instant précis auquel ledit mobile s'arrête. Au contraire, dans le système selon l'invention, en fonction de la sensibilité des moyens délivrant le signal d'accélération, on considère que le mobile est arrêté lorsque plusieurs valeurs numériques successives $a_i$, par exemple trois ou quatre, sont nulles. En toute rigueur, un mobile, même doté d'une accélération nulle, reste en mouvement si sa vitesse initiale est non-nulle ; toutefois, du point de vue pratique, en raison des frottements, des vibrations et de l'imperfection des commandes, une accélération n'est nulle sur plusieurs périodes d'échantillonnage que si le mobile est arrêté.

Les moyens susceptibles de délivrer en continu le signal d'accélération peuvent être de tout type connu. Ils sont par exemple constitués par un accéléromètre à masse suspendue, comme ceux fabriqués par exemple par la Société SCHAEVITZ.

Dans le cas où ledit mobile est susceptible de se déplacer dans l'espace le long de deux ou trois axes rectilignes, par exemple rectangulaires, comme cela est usuel pour les bras de robots, on prévoit pour chacun desdits axes :

- des moyens pour délivrer en continu des signaux analogiques représentatifs de l'accélération instantanée dudit mobile le long de chaque axe ;
- des moyens pour échantillonner, à une période d'échantillonnage T, chacun desdits signaux analogiques pour obtenir des suites de valeurs numériques $a_i$, telles que chaque suite est composée de valeurs numériques correspondant à l'accélération dudit mobile le long d'un desdits axes à des instants successifs, deux à deux distants de la période d'échantillonnage T ;
- des moyens de calcul numériques pour calculer, à chacun desdits instants et pour chaque suite, les deux expressions :

(1)     $x_i = 1/2.a_i.t^2 + v_i - 1.t + x_i - 1$

(2)     $v_i = a_i.t + v_i - 1$

dans lesquelles :

. t représente le temps

. $x_i$ et $x_i-1$ sont les abscisses respectives dudit mobile aux instants $t_i$ et $t_i-1$ ; et

. $v_i$ et $v_i-1$ sont les vitesses respectives dudit mobile aux instants $t_i$ et $t_i-1$.

Le système est alors caractérisé en ce qu'il comporte des moyens pour, d'une part, arrêter le fonctionnement desdits moyens de calcul lorsqu'un nombre $n$ prédéterminé de valeurs $a_i$ consécutives de toutes les suites sont nulles et que la vitesse est voisine de zéro le long desdits axes, et, d'autre part, forcer à zéro la valeur de ladite vitesse et en ce que lesdits moyens de calcul numériques délivrent alors à leur sortie la position à laquelle s'est arrêté ledit mobile.

Les figures du dessin annexé feront bien comprendre comment l'invention peut être réalisée. Sur ces figures, des références identiques désignent des éléments semblables.

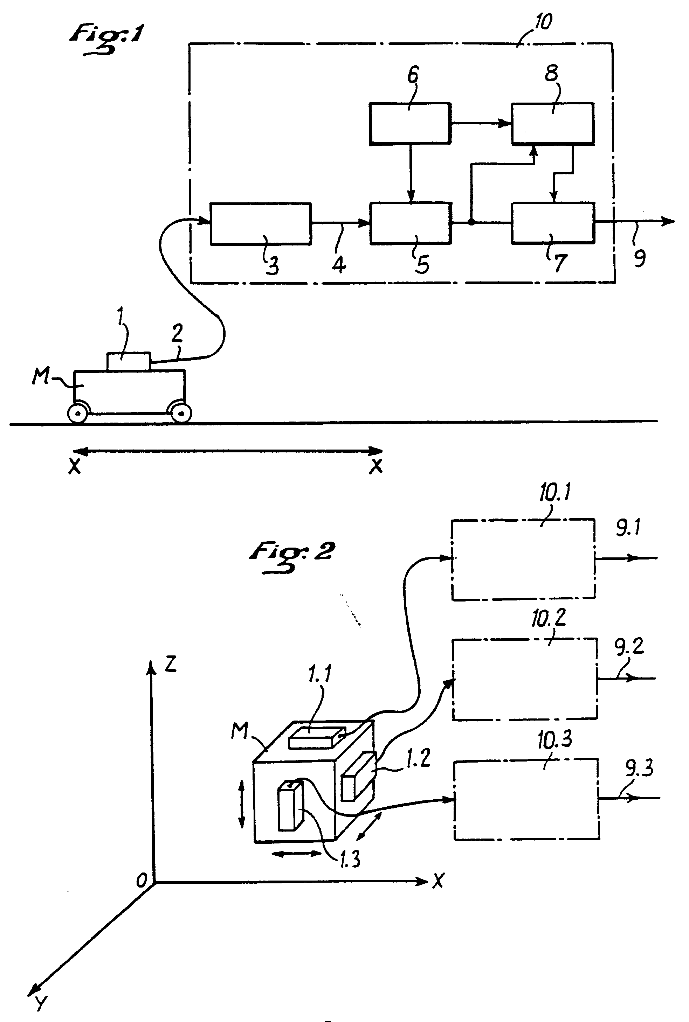

Le système représenté sur la figure 1 comporte un accéléromètre 1, monté sur un organe mobile M se déplaçant le long d'un axe X-X, susceptible de délivrer à sa sortie 2 un signal analogique représentatif de l'accélération instantanée dudit organe mobile. Ce signal est filtré par un filtre 3 qui délivre, à sa sortie 4, le signal filtré à un dispositif d'échantillonnage 5, piloté par une horloge 6 de période T. Des moyens de calcul 7 reçoivent les échantillons fournis par le dispositif d'échantillonnage 5 et sont pilotés par un dispositif de commande 8, recevant le signal de l'horloge 6 et le signal échantillonné provenant du dispositif 5. Les dispositifs et moyens 3,5,6,7 et 8, formant un ensemble 10, peuvent être montés sur l'organe mobile ; toutefois, ils peuvent également être montés à poste fixe.

En supposant qu'à l'instant initial to, la vitesse initiale vo et la position initiale xo de l'organe mobile soient nulles, et que l'accélération de ce dernier prenne la valeur a1 dans l'intervalle de temps T consécutif, le dispositif d'échantillonnage 5 délivre aux moyens de calcul 7 un échantillon représentatif de $a1$ entre les instants to et t1 = to + T. Lesdits moyens de calcul 7 effectuant les opérations (1) et (2) précitées, il apparaît donc à l'instant t1 = to + T, à la sortie 9 desdits moyens de calcul, les valeurs :

$x1 = 1/2.a1.T^2$ et

$v1 = a1.T$

ces valeurs x1 et v1 étant respectivement la mesure de la position et de la vitesse du mobile à l'instant t1.

Le mobile continuant son déplacement le long de l'axe X-X, on voit qu'à l'instant t2 = t1 + T = to + 2T, il apparaît à la sortie 9, les valeurs :

$x2 = 1/2.a2.(2T)^2 + v1.(2T) + x1$ et

$v2 = a2.(2T) + v1,$

a2 étant la valeur de l'accélération du mobile entre les instants t1 et t2, tandis que x2 et v2 sont respectivement la position et la vitesse dudit mobile à l'instant t2.

Le mobile poursuivant sa course, on voit que, a l'instant $t_i$ = to + (i.T), il apparaît à la sortie 9 des moyens de calcul 7, les valeurs :

$x_i = 1/2.a_i.(i.T)^2 + v_i - 1.(i.T) + x_i - 1$ et

$v_i = a_i.(i.T) + v_i - 1$

dans lesquelles $x_i$ et $x_i-1$ sont les abscisses respectives du mobile le long de l'axe X-X aux instants $t_i$ et $t_i-1$ et $v_i$ et $v_i-1$ sont les vitesses respectives dudit mobile aux mêmes instants.

On voit ainsi que, grâce au système de la figure 1, la position du mobile à chaque instant peut être déterminée à partir de la position et de la vitesse à l'instant précédent et de la mesure de l'accélération dans l'intervalle entre ces deux instants.

Si à un instant donné $t_i$, la mesure de $a_i$ devient nulle, les expressions (1) et (2) deviennent respectivement :

(3)     $x_i = v_i - 1.t + x_i - 1$

(4)     $v_i = v_i - 1$

Ainsi, théoriquement, la vitesse à l'instant $t_i$ garde la valeur qu'elle avait à l'instant $t_i-1$ et la position $x_i$ à l'instant $t_i$ se déduit de la vitesse et de la position à l'instant $t_i-1$.

Cependant, en raison notamment des frottements entre l'organe mobile et son support, on doit considérer que si l'accélération $a_i$ est nulle pendant quelques intervalles T consécutifs et la vitesse $v_i$ voisine de zéro, le mobile s'arrête. Le nombre $n$ d'intervalles à choisir pour être sûr que le mobile est arrêté dépend bien entendu de ces frottements et de la sensibilité de l'accéléromètre 3. Il est déterminable facilement par des essais.

Aussi, dès que le dispositif de commande 8 constate que les mesures $a_i$ sont nulles pendant $n$ intervalles T consécutifs et que la vitesse est proche de zéro, il force à zéro la valeur de la vitesse et les moyens de calcul 7 délivrent alors à leur sortie 9 la position à laquelle s'est arrêté le mobile.

Dans le cas où, comme cela est représenté sur la figure 2, le mobile M peut se déplacer dans un espace défini par plusieurs axes OX,OY,OZ différents, on prévoit sur ledit mobile autant d'accéléromètres 1.1,1.2 et 1.3 qu'il y a d'axes et chacun susceptible de fournir la mesure analogique de l'accélération le long d'un desdits axes. On prévoit de plus autant de dispositifs 10.1,10.2,10.3 qu'il y a d'axes, chacun de ces dispositifs ayant une structure semblable à celle du dispositif 10 de la figure 1. Eventuellement, lesdits dispositifs 10.1, 10.2 et 10.3 peuvent présenter des moyens communs. Par exemple, un seul calculateur 7 peut être prévu pour l'ensemble desdits dispositifs. Ainsi, ceux-ci peuvent délivrer à leurs sorties 9.1,9.2 et 9.3, à chaque instant, la position du mobile M le long de chacun desdits axes OX,OY,OZ.

## Revendications

1. Système pour la mesure de la position d'un mobile (M) se déplaçant le long d'un axe rectiligne (X-X), comportant :
   - des moyens (1) pour délivrer en continu un signal analogique représentatif de l'accélération instantanée dudit mobile ;
   - des moyens (5) pour échantillonner, à une période d'échantillonnage T, ledit signal analogique de façon à obtenir une suite de valeurs numériques $a_i$ (avec $i = 0,1,2,3,...$) correspondant à la valeur de l'accélération dudit mobile à des instants successifs $t_i$, deux à deux distants de la période d'échantillonnage T ;
   - des moyens de calcul numériques (7) pour calculer, à chacun desdits instants, les deux expressions :
     (1)    $x_i = 1/2.a_i.t^2 + v_i - 1.t + x_i - 1$
         (2)    $v_i = a_i.t + v_i - 1$
     dans lesquelles :
       . t représente le temps
       . $x_i$ et $x_i-1$ sont les abcsisses respectives dudit mobile aux instants $t_i$ et $t_i-1$ ; et
       . $v_i$ et $v_i-1$ sont les vitesses respectives dudit mobile aux instants $t_i$ et $t_i-1$,
   caractérisé en ce qu'il comporte des moyens (8) pour, d'une part, arrêter le fonctionnement desdits moyens de calcul (7) lorsqu'un nombre $n$ prédéterminé de valeurs $a_i$ consécutives délivrées par lesdits moyens d'échantillonnage (5) sont nulles et que la vitesse $v_i$ est voisine de zéro, et, d'autre part, forcer à zéro la valeur de ladite vitesse et en ce que lesdits moyens de calcul (7) délivrent alors à leur sortie la position à laquelle s'est arrêté ledit mobile (M).

2. Système pour la mesure de la position d'un mobile (M) susceptible de se déplacer le long de plusieurs axes rectilignes (OX,OY,OZ), comportant, pour chacun desdits axes :
   - des moyens (1.1,1.2,1.3) pour délivrer en continu des signaux analogiques représentatifs de l'accélération instantanée dudit mobile le long de chaque axe ;
   - des moyens (5) pour échantillonner, à une période d'échantillonnage T, chacun desdits signaux analogiques pour obtenir des suites de valeurs numériques $a_i$, telles que chaque suite est composée de valeurs numériques correspondant à l'accélération dudit mobile le long d'un desdits axes à des instants successifs, deux à deux distants de la période d'échantillonnage T ;
   - des moyens de calcul numériques (7) pour calculer, à chacun desdits instants et pour chaque suite, les deux expressions :
     (1)    $x_i = 1/2.a_i.t^2 + v_i - 1.t + x_i - 1$
         (2)    $v_i = a_i.t + v_i - 1$
     dans lesquelles :
       . t représente le temps
       . $x_i$ et $x_i-1$ sont les abscisses respectives dudit mobile aux instants $t_i$ et $t_i-1$ ; et
       . $v_i$ et $v_i-1$ sont les vitesses respectives dudit mobile aux instants $t_i$ et $t_i-1$,
   caractérisé en ce qu'il comporte des moyens pour, d'une part, arrêter le fonctionnement desdits moyens de calcul lorsqu'un nombre $n$ prédéterminé de valeurs $a_i$ consécutives de toutes les suites sont nulles et que la vitesse est voisine de zéro le long desdits axes, et, d'autre part, forcer à zéro la valeur de ladite vitesse et en ce que lesdits moyens de calcul (7) délivrent alors à leur sortie la position à laquelle s'est arrêté ledit mobile (M).

3. Robot, notamment destiné à la peinture, caractérisé en ce que son bras mobile est équipé du système spécifié sous l'une quelconque des revendications 1 ou 2.

## Patentansprüche

1. System zur Messung der Stellung eines Mobils (M) das sich entlang einer geradlinigen Achse (X-X) bewegt und folgendes enthält:

- Mittel (1) zur dauernden Ausgabe eines Analogsignals, das der augenblicklichen Beschleunigung des besagten Mobils entspricht;
- Mittel (5) zur Probenahme, während einer Zeitspanne T, des besagten Analogsignals, um eine Folge numerischer Werte ai (mit i = 0, 1, 2, 3, ....) zu erhalten, die dem Wert der Beschleunigung des besagten Mobils an aufeinanderfolgenden Augenblicken ti entspricht, jeweils paarweise von dem Zeitabschnitt T der Probennahme entfernt;
- numerische Berechnungsmittel (7) zum Berechnen bei jedem der besagten Augenblicke, der zwei Ausdrucke:
  (1)    $xi = 1/2.ai.t^2 + vi - 1.t + xi - 1$
  (2)    $vi = ai.t + vi - 1$
  in welchen:
  . t die Zeit darstellt
  . xi und xi-1 die entsprechenden Abszissen des besagten Mobils in den Augenblicken ti und ti-1 sind; und
  . vi und vi-1 die entsprechenden Geschwindigkeiten des besagten Mobils in den Augenblicken ti und ti-1,

dadurch gekennzeichnet, daß es Mittel (8) enthält, um einerseits die Funktion der besagten Berechnungsmittel (7) auszuschalten, wenn eine festgelegte Anzahl n der von der besagten Stichprobenmitteln (5) ausgegebenen aufeinanderfolgenden Werten ai Null sind und wenn die Geschwindigkeit vi nahe Null ist, und andererseits, den Wert der besagten Geschwindigkeit auf Null zu treiben und daß die besagten Berechnungsmittel (7) dann an ihrem Ausgang die Stellung, bei der das besagte Mobil (m) stillsteht, ausgeben:

2. System zur Messung der Stellung eines Mobils (M), das sich entlang mehrerer geradlinigen Achsen (OX, OY, OZ) bewegen kann, wobei jede Achse folgendes enthält:
   - Mittel (1.1, 1.2, 1.3) zur kontinuierlichen Ausgabe des Analogsignale für die augenblickliche Beschleunigung des besagten Mobils entlang jeder Achse;
   - Mittel (5) für die Probenahme, während eines Stichprobenzeitabschnitts T, jedes der besagten Analogsignale, um Folgen von numerischen Werten ai zu erhalten, so daß jede Folge aus numerischen Werten besteht, die der Beschleunigung des besagten Mobils entlang einer der besagten Achsen in aufeinanderfolgenden Augenblicken entspricht, jeweils paarweise vom Stichprobenzeitabschnitt T entfernt;
   - numerische Berechnungsmittel (7) zur Berechnung, in jedem der besagten Augenblicke und für jede Folge, der beiden Ausdrucke:
  (1)    $xi = 1/2.ai.t^2 + vi - 1.t + xi - 1$
  (2)    $vi = ai.t + vi - 1$
  in welchen:
  . t die Zeit darstellt
  . xi und xi-1 die entsprechenden Abszissen des besagten Mobils in den Augenblicken ti und ti-1 sind; und
  . vi und vi-1 die entsprechenden Geschwindigkeiten des besagten Mobils in den Augenblicken ti und ti-1,

dadurch gekennzeichnet,daß es Mittel enthält, um einerseits die Funktion der besagten Berechnungsmittel auszuschalten, wenn eine festgelegte Anzahl n von aufeinanderfolgenden Werten ai von allen Folgen Null sind und die Geschwindigkeit nahe Null ist entlang der besagten Achsen, und andererseits, den Wert der besagten Geschwindigkeit auf Null zu treiben, und daß die besagten Berechnungsmittel (7) dann an ihrem Ausgang die Stellung, bei welcher das besagte Mobil (M) stillsteht, ausgeben.

3. Roboter, insbesondere zum Lackieren vorgesehen, dadurch gekennzeichnet, daß sein beweglicher Arm mit einem unter irgendeinem der Ansprüche 1 oder 2 spezifizierten System ausgerüstet ist.

**Claims**

1. System for measuring the position of a mobile arrangement (M) moving along a straight axis (X-X), including:
   - means (1) for continuously delivering an analog signal representing the instantaneous acceleration of the said mobile arrangement;
   - means (5) for sampling, with a sampling period T, the said analog signal so as to obtain a sequence of numerical values ai (with i = 0,1,2,3,...) corresponding to the value of the acceleration of the said mobile arrangement at successive instants ti, pairwise distant from the sampling period T;
   - means of numerical calculation (7) for computing, at each of the said instants, the two expressions:
     (1)    $xi = 1/2.ai.t^2 + vi - 1.t + xi - 1$
     (2)    $vi = ai.t + vi - 1$
     in which:
     . t represents time
     . xi and xi-1 are the respective abscissae of the said mobile arrangement at the instants ti and ti-1; and
     . vi and vi-1 are the respective velocities of the said mobile arrangement at the instants ti and ti-1, characterised in that it includes means (8) for, on the one hand, halting the operation of the said computation means (7) when a predetermined number $n$ of consecutive values $ai$ delivered by the said sampling means (5) are zero and when the velocity $vi$ is nearly zero, and, on the other hand, setting the value of the said velocity to zero and in that the said computation means (7) then deliver at their output the position at which the said mobile arrangement (M) has come to a halt.

2. System for measuring the position of a mobile arrangement (M) capable of moving along several straight axes (OX, OY, OZ), including, for each of the said axes:

  - means (1.1, 1.2, 1.3) for continuously delivering analog signals representing the instantaneous acceleration of the said mobile arrangement along each axis;
  - means (5) for sampling, with a sampling period T, each of the said analog signals in order to obtain sequences of numerical values $ai$, such that each sequence is composed of numerical values corresponding to the acceleration of the said mobile arrangement along one of the said axes at successive instants, pairwise distant from the sampling period T;
  - means of numerical calculation (7) for computing, at each of the said instants and for each sequence, the two expressions:

  (1)     $xi = 1/2.ai.t^2 + vi - 1.t + xi - 1$

       (2)     $vi = ai.t + vi - 1$

  in which:

     . t represents time

     . xi and xi-1 are the respective abscissae of the said mobile arrangement at the instants ti and ti-1; and

     . vi and vi-1 are the respective velocities of the said mobile arrangement at the instants ti and ti-1,

characterised in that it includes means for, on the one hand, halting the operation of the said computation means when a predetermined number $n$ of consecutive values $ai$ of all the sequences are zero and when the velocity is nearly zero along the said axes, and, on the other hand, setting the value of the said velocity to zero and in that the said computation means (7) then deliver at their output the position at which the said mobile arrangement (M) has come to a halt.

3. Robot, in particular intended for painting, characterised in that its mobile arm is equipped with the system specified under either one of Claims 1 or 2.

Fig:1

Fig:2